# EUROPÄISCHE PATENTSCHRIFT

(11) **EP 0 523 458 B1**
(45) Veröffentlichungstag und Bekanntmachung des Hinweises auf die Patenterteilung: **14.12.1994**
(21) Anmeldenummer: 92111213.2
(22) Anmeldetag: 02.07.1992
(51) Int. Cl.: B62D 25/16

(54) **Kotflügel zur Abdeckung eines Fahrzeugrads**
Mudguard for covering a vehicle wheel
Garde-boue pour couvrir une roue de véhicule

(30) Priorität: 15.07.1991 DE 9108695 U
(43) Veröffentlichungstag der Anmeldung: 20.01.1993
(73) Patentinhaber: Sauermann, Hans, D-86558 Freinhausen (DE)
(72) Erfinder: Sauermann, Hans, D-86558 Freinhausen (DE)
(74) Vertreter: Sasse, Volker, Dipl.-Ing.

(56) Entgegenhaltungen:
- DE-A- 3 939 937
- GB-A- 2 191 160
- US-A- 4 436 319
- US-A- 4 921 276

## Beschreibung

Die Erfindung betrifft einen Kotflügel zur Abdeckung eines Fahrzeugrads, an dessen Innenseite eine sich in seiner Längsrichtung erstreckende Kammer vorgesehen ist, die in einer dem Fahrzeugrad zugewandten Innenwand Eintrittsöffnungen für von dem Fahrzeugrad abgespritztes Wasser und in einem unteren Bereich wenigstens eine Austrittsöffnung für das Wasser aufweist. Ein Kotflügel entsprechend den im Oberbegriff des Anspruchs 1 aufgeführten Merkmalen kann als aus der DE-A-3 939 937 bekannt gelten.

Aufgabe der Erfindung ist es, einen einfach herstellbaren Kotflügel dieser Art anzugeben, der vom Fahrzeugrad abgespritztes Wasser, ohne daß es zu einem beachtlichen Teil abtropfen kann, nach unten abführt.

Zur Lösung dieser Aufgabe ist der Kotflügel dadurch gekennzeichnet, daß die Innenwand den Eintrittsöffnungen zugeordnete, dem Fahrzeugrad zugewandte, in Richtung auf die Eintrittsöffnungen zueinander strebende, einstückig zusammenhängende Wasserrührungsflächen aufweist, die Begrenzungsflächen von sich quer zur Längsrichtung der Kammer erstreckenden, zahnartigen Rippen sind.

Eine besonders einfache, rationelle Herstellungsmöglichkeit des Kotflügels ist dadurch gekennzeichnet, daß die Kammer einstückig mit dem Kotflügel aus Kunststoff, insbesondere Polyethylen oder Polypropylen, besteht.

Sollte die Steifigkeit der Kammer im Kotflügel nicht ausreichen, so ist bevorzugt die Kammer mit Versteifungen und/oder Abstandshaltern versehen. Eine Versteifung und/oder Abstandshaltung kann mit Blechteilen von der Innenseite des Kotflügels aus erfolgen, die mit von außen in den Kotflügel eingesetzten Schrauben gesichert sind. Die der Versteifung und/oder Abstandshaltung dienenden Elemente können aber auch mit dem Kotflügel und/oder der Innenwand der Kammer einstückig und gegebenenfalls mit Einlegeteilen wie Schrauben oder Muttern versehen sein, die dann mittels Muttern bzw. Schrauben an der jeweils gegenüberliegenden Wand gesichert werden.

Damit Wasser ganz nach unten abgeführt wird, erstreckt sich bevorzugt die Kammer bis über einen unten an den Kotflügel angelenkten Schmutzabweiser. Dabei ist der Schmutzabweiser bevorzugt einstückig mit dem Kotflügel hergestellt, wobei dann der Querschnitt des Schmutzabweisers dem Querschnitt des Kotflügels entspricht.

Die Eintrittsöffnungen für das Wasser sind bevorzugt sich quer zur Längsrichtung der Kammer erstreckende Schlitze. Dabei liegen jeweils mehrere Schlitze in einer quer zur Längsrichtung der Kammer verlaufenden Reihe und sind zur Versteifung der Kammer von Reihe zu Reihe gegeneinander versetzt.

Damit das Wasser möglichst weit vom Fahrzeugrad abgeführt wird, sind die Schlitze und Rippen von der Mitte aus beidseitig zur Außenseite des Kotflügels nach unten geneigt. Die Wasserabführung aus der Kammer und die Reinigung der Kammer wird erleichtert, wenn die Kammer wenigstens eine Belüftungsöffnung und/oder Reinigungsöffnung aufweist.

Um eine Vereisung der Eintrittsöffnungen zu verhindern, sind in der Kammer im Bereich der Eintrittsöffnungen Heizeinrichtungen, insbesondere Heizstäbe oder Heizbänder, die mit Solarzellen oder durch Steckverbindungen mit einer Batterie verbunden sind, angeordnet.

Um möglichst weitgehend von der gesamten Innenseite des Kotflügels Wasser abzuführen, erstreckt sich die Kammer bevorzugt bis über wenigstens einen radial nach innen gerichteten Randbereich des Kotflügels.

Vom Fahrzeugrad abgespritztes Wasser wird von der Kammer besonders wirksam aufgenommen, wenn deren Innenwand in einer Übergangszone zu wenigstens einem Randbereich weitere Eintrittsöffnungen aufweist, denen dem Fahrzeugrad zugewandte, in Richtung auf diese weiteren Eintrittsöffnungen zueinander strebende, mit dem Kotflügel einstückige Wasserführungsflächen zugeordnet sind, besonders wenn die weiteren Eintrittsöffnungen sich in Längsrichtung der Kammer erstreckende Schlitze sind und/oder den Richtungen des von dem Fahrzeugrad abgespritzten Wassers zugewandt sind.

Die Erfindung wird im folgenden an Ausführungsbeispielen unter Hinweis auf die beigefügten Zeichnungen erläutert.

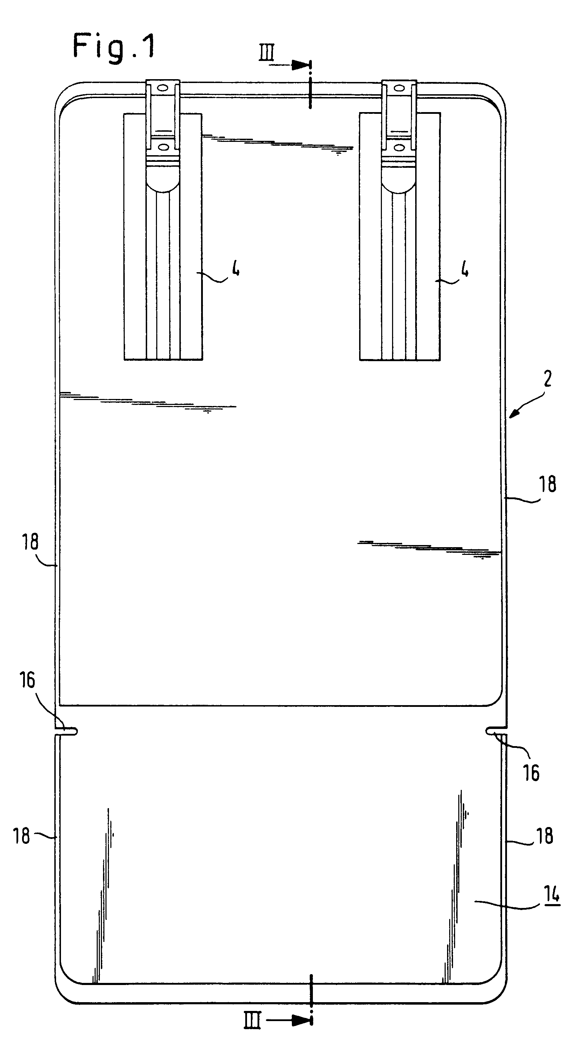

- Fig. 1: zeigt eine Rückansicht eines Kotflügels.
- Fig. 2: zeigt eine Seitenansicht des Kotflügels nach Fig. 1.
- Fig. 3: zeigt einen Schnitt längs der Linie III-III in Fig. 1.
- Fig. 4: zeigt vergrößert den Bereich IV aus Fig. 3.
- Fig. 5: zeigt eine Ansicht des Kotflügels auf seine Innenseite in Blickrichtung V der Fig. 2.
- Fig. 6: zeigt eine Fig. 5 entsprechende Ansicht eines zweiten Ausführungsbeispiels des Kotflügels.
- Fig. 7: zeigt einen Schnitt längs VII-VII in Fig. 6.

Gleiche Bezugsziffern bezeichnen gleiche Bauteile.

Der Kotflügel 2 nach dem Ausführungsbeispiel weist an sich bekannte und daher hier nicht näher beschriebene Beschlagteile 4 zur Befestigung an einem Fahrzeug auf. An seiner Innenseite befindet sich eine sich in seiner Längsrichtung erstreckende Kammer 6, die in einer dem Fahrzeugrad zugewandten Innenwand 8 Eintrittsöffnungen 10 für von dem Fahrzeugrad abgespritztes Wasser und in einem unteren Bereich eine Austrittsöffnung 12 für das Wasser aufweist. Die Kammer 6 ist einstückig mit dem Kotflügel 2 aus Polyethylen mittels des Rotationsgießverfahrens hergestellt. Ihre Außenwand ist durch den Kotflügel 2 gebildet.

Die Kammer 6 erstreckt sich bis über einen unten an den Kotflügel 2 angelenkten Schmutzabweiser 14, der mit dem Kotflügel einstückig hergestellt ist und einen dem Kotflügel 2 entsprechenden Querschnitt aufweist. Die Flexibilität des Schmutzabweisers 14 gegenüber dem Kotflügel 2 wird durch Schlitze 16 in etwa radial nach innen gerichteten Randbereichen 18 zwischen dem Kotflügel 2 und dem Schmutzabweiser 14 erzielt.

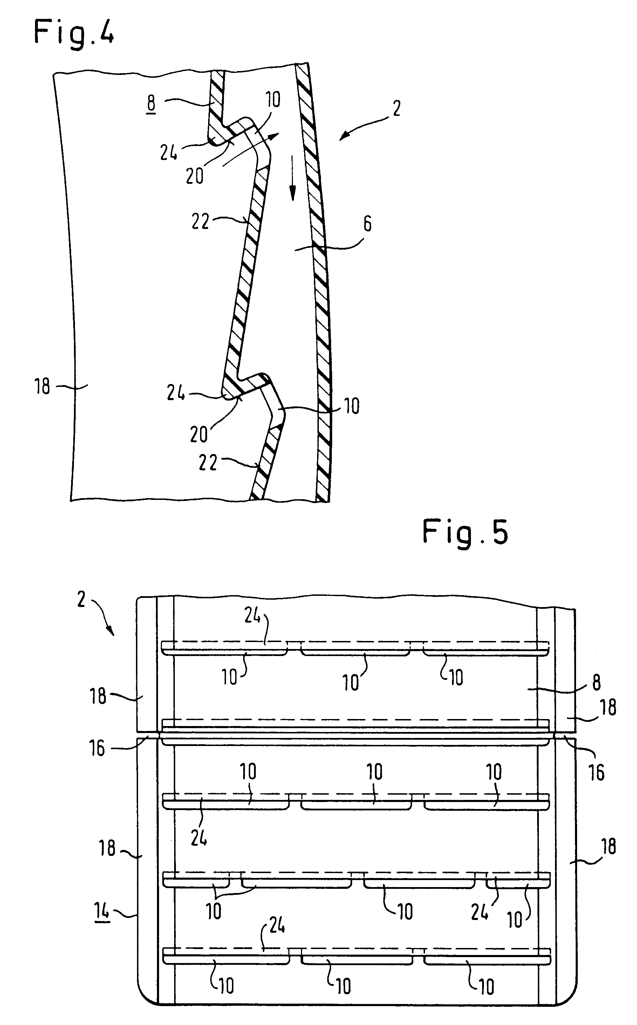

Die Eintrittsöffnungen 10 sind durch sich quer zur Längsrichtung der Kammer 6 erstreckende Schlitze 10 gebildet. Jeweils mehrere Schlitze 10 liegen in einer quer zur Längsrichtung der Kammer 6 verlaufenden Reihe. Dabei sind die Schlitze 10, wie aus Fig. 5 ersichtlich, von Reihe zu Reihe gegeneinander versetzt.

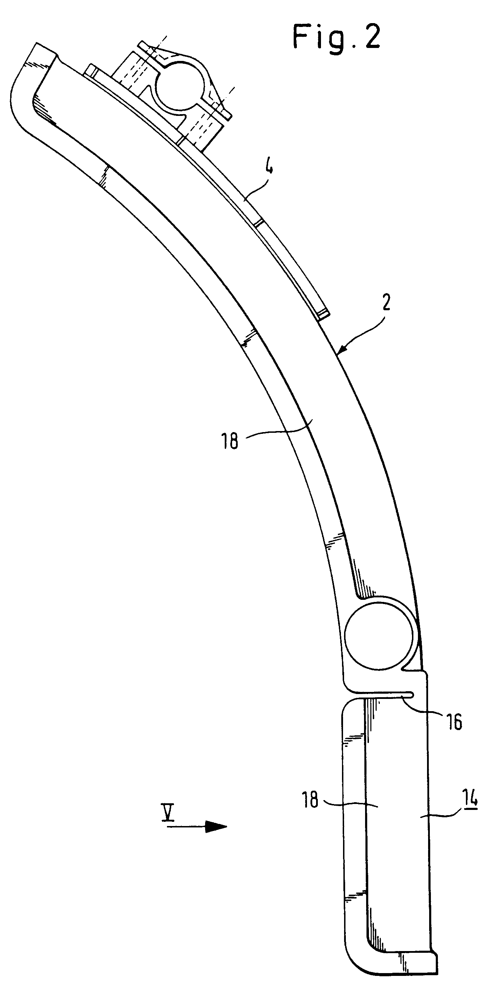

Aus Fig. 2 und 4 ist erkennbar, daß die Eintrittsöffnungen 10 den Richtungen des von dem Fahrzeugrad abgespritzten Wassers zugewandt sind. Die Innenwand 8 weist den Eintrittsöffnungen 10 zugeordnete, dem Fahrzeugrad zugewandte, in Richtung auf die Eintrittsöffnungen 10 zueinander strebende Wasserführungsflächen 20, 22 auf (Fig. 4). Diese Wasserführungsflächen 20, 22 sind Begrenzungsflächen von sich quer zur Längsrichtung der Kammer 6 erstreckenden, zahnartigen Rippen 24. Diese Rippen sind zur Außenseite des Kotflügels 2 nach unten geneigt, bevorzugt um 5 bis 15°.

Die Kammer weist oben eine Belüftungs- und Reinigungsöffnung 26 auf.

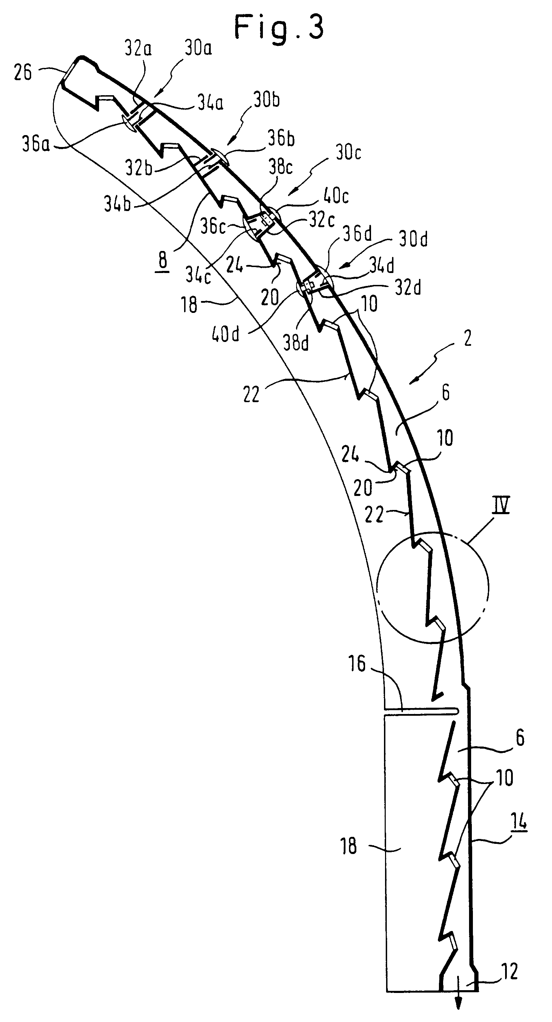

Fig. 3 zeigt schematisch vier verschiedene Arten von Abstandshaltern 30a, 30b, 30c, 30d.

Bei dem Abstandshalter 30a ist ein Zylinder 32a an die Innenseite des Kotflügels 2 angesetzt und zur Innenwand 8 der Kammer 6 hin offen. Über dem Zylinder 32a befindet sich in der Innenwand 8 eine Öffnung zum Durchstecken eines Ansatzes 34a an einer Kappe 36a.

Beim Abstandshalter 30b befindet sich der Zylinder 32b einstückig an der Innenwand 8, und die Kappe 36b ist mit ihrem Ansatz 34b von außen in den Zylinder 32b gesteckt.

Bei dem Abstandshalter 30c ist an die Innenseite der Innenwand 8 ein Hohlkonus 32c angesetzt, der in seinem dem Kotflügel 2 zugewandten Ende eine Mutter 38c zum Einschrauben einer Schraube 40c von außen aufweist. Von der Innenseite der Innenwand 8 aus ist in den Hohlkonus ein Ansatz 34c einer Kappe 36c gesteckt.

Bei dem Abstandshalter 30d sind gegenüber dem Abstandshalter 30c innen und außen gegeneinander vertauscht. Der Hohlkonus 32d sitzt an der Innenseite des Kotflügels 2 und nimmt von außen Ansätze 34d an einer Kappe 36d auf. Das innere Ende des Hohlkonus 32d nimmt eine Mutter 38d einstückig auf, in die von der Innenseite der Innenwand 8 aus eine Schraube 40d geschraubt ist.

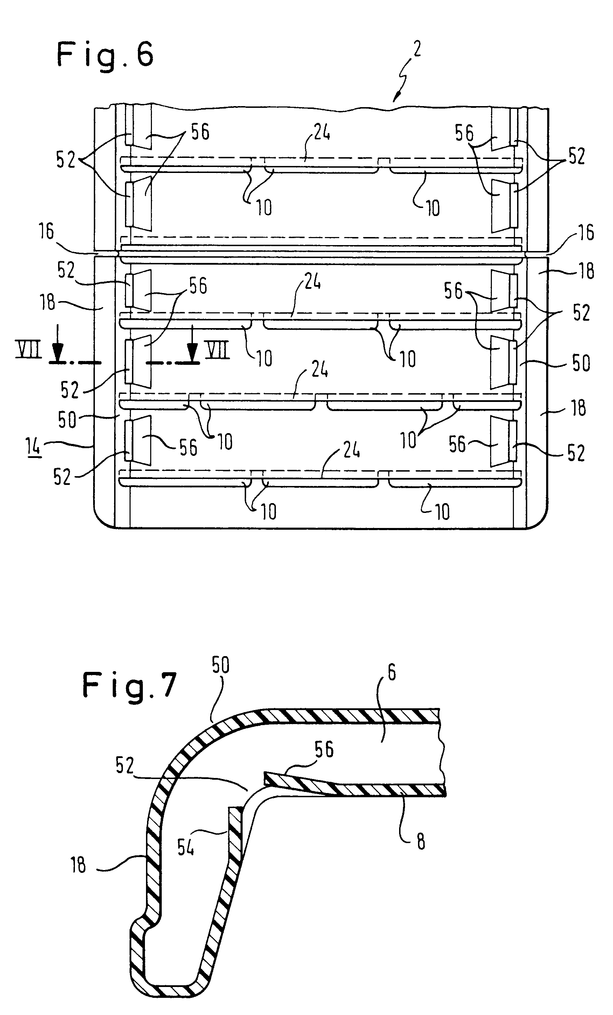

Der Kotflügel 2 nach den Fig. 6 und 7 unterscheidet sich von dem Kotflügel nach Fig. 5 dadurch, daß zwischen den Reihen von Schlitzen 10 in Übergangszonen 50 zu den Randbereichen 18 des Kotflügels 2 Schlitze 52 vorgesehen sind, die sich in Längsrichtung des Kotflügels 2 erstrecken. Diesen Schlitzen 52 sind mit der Innenwand 8 der Kammer 6 einstückige Wasserführungsflächen 54, 56 zugeordnet. Mit ihren Wasserführungsflächen 54, 56 sind die Schlitze 52 den Richtungen des vom Fahrzeugrad abgespritzten Wassers zugewandt.

## Patentansprüche

1. Kotflügel (2) zur Abdeckung eines Fahrzeugrads, an dessen Innenseite eine sich in seiner Längsrichtung erstreckende Kammer (6) vorgesehen ist, die in einer dem Fahrzeugrad zugewandten Innenwand (8) Eintrittsöffnungen (10) für von dem Fahrzeugrad abgespritztes Wasser und in einem unteren Bereich wenigstens eine Austrittsöffnung (12) für das Wasser aufweist,
**dadurch gekennzeichnet,**
daß die Innenwand (8) den Eintrittsöffnungen (10) zugeordnete, dem Fahrzeugrad zugewandte, in Richtung auf die Eintrittsöffnungen (10) zueinander strebende, einstückig zusammenhängende Wasserführungsflächen (20, 22) aufweist, die Begrenzungsflächen von sich quer zur Längsrichtung der Kammer (6) erstreckenden, zahnartigen Rippen (24) sind.

2. Kotflügel nach Anspruch 1, dadurch gekennzeichnet, daß die Kammer (6) einstückig mit dem Kotflügel (2) aus Kunststoff, insbesondere Polyethylen, besteht.

3. Kotflügel nach Anspruch 2, dadurch gekennzeichnet, daß die Kammer (6) mit Versteifungen versehen ist.

4. Kotflügel nach einem der vorstehenden Ansprüche, dadurch gekennzeichnet, daß sich die Kammer (6) bis über einen unten an den Kotflügel (2) angelenkten Schmutzabweiser (14) erstreckt.

5. Kotflügel nach Anspruch 4, dadurch gekennzeichnet, daß der Querschnitt des Schmutzabweisers (14) dem Querschnitt des Kotflügels (2) entspricht.

6. Kotflügel nach einem der vorstehenden Ansprüche, dadurch gekennzeichnet, daß die Eintrittsöffnungen (10) für das Wasser sich quer zur Längsrichtung der Kammer (6) erstreckende Schlitze (10) sind.

7. Kotflügel nach Anspruch 6, dadurch gekennzeichnet, daß jeweils mehrere Schlitze (10) in einer quer zur Längsrichtung der Kammer (6) verlaufenden Reihe liegen und die Schlitze (10) von Reihe zu Reihe gegeneinander versetzt sind.

8. Kotflügel nach einem der vorstehenden Ansprüche, dadurch gekennzeichnet, daß die Eintrittsöffnungen (10) den Richtungen des von dem Fahrzeugrad abgespritzten Wassers zugewandt sind.

9. Kotflügel nach einem der vorstehenden Ansprüche, dadurch gekennzeichnet, daß die Rippen (24) etwas zur Außenseite des Kotflügels (2) nach unten geneigt sind.

10. Kotflügel nach einem der vorstehenden Ansprüche, dadurch gekennzeichnet, daß die Kammer (6) wenigstens eine Belüftungsöffnung und/oder Reinigungsöffnung (26) aufweist.

11. Kotflügel nach einem der vorstehenden Ansprüche, dadurch gekennzeichnet, daß in der Kammer (6) im Bereich der Eintrittsöffnungen (10) Heizeinrichtungen, insbesondere Heizstäbe, angeordnet sind.

12. Kotflügel nach einem der vorstehenden Ansprüche, dadurch gekennzeichnet, daß sich die Kammer (6) bis über wenigstens einen radial nach innen gerichteten Randbereich (18) des Kotflügels (2) erstreckt.

13. Kotflügel nach Anspruch 12, dadurch gekennzeichnet, daß die Innenwand (8) in einer Übergangszone (50) zu wenigstens einem Randbereich (18) weitere Eintrittsöffnungen (52) aufweist, denen dem Fahrzeugrad zugewandte, in Richtung auf diese weiteren Eintrittsöffnungen (52) zueinander strebende, mit dem Kotflügel (2) einstückige Wasserführungsflächen (54, 56) zugeordnet sind.

14. Kotflügel nach Anspruch 13, dadurch gekennzeichnet, daß die weiteren Eintrittsöffnungen (52) sich in Längsrichtung der Kammer (6) erstreckende Schlitze (52) sind.

15. Kotflügel nach Anspruch 13 oder 14, dadurch gekennzeichnet, daß auch die weiteren Eintrittsöffnungen (52) den Richtungen des von dem Fahrzeugrad abgespritzten Wassers zugewandt sind.

## Claims

1. A mudguard (2) far covering a vehicle wheel, on whose inner side provision is made for a chamber (6) extending in its longitudinal direction which has in an inner wall (8) inlet openings (10) for the water sprayed off from the vehicle wheel, which face the vehicle wheel and in a lower zone, at least one outlet opening (12) for the water,
**characterized in that**
the inner wall (8) has water guidance surfaces (20, 22) facing the vehicle wheel, converging in the direction towards the inlet openings (10) and integrally joined to each other, which are delimiting surfaces of tooth-type ribs (24) that extend transversely to the longitudinal direction of the chamber (6).

2. A mudguard according to claim 1, characterized in that the chamber (6) consists, together with the mudguard (2), integrally, of a synthetic material, in particular polyethylene.

3. A mudguard according to claim 2, characterized in that the chamber (6) is provided with stiffeners.

4. A mudguard according to one of the preceding claims, characterized in that the chamber (6) extends as far as over a dirt deflector (14) which is articulated to the mudguard (2).

5. A mudguard according to claim 4, characterized in that the cross-section of the dirt deflector (14) corresponds to the cross-section of the mudguard (2).

6. A mudguard according to one of the preceding claims, characterized in that the inlet openings (10) for the water are slots (10) extending transversely to the longitudinal direction of the chamber (6).

7. A mudguard according to claim 6, characterized in that in each case, there lie several slots (10) in a row extending transversely to the longitudinal direction of the chamber (6) and that the slots (10) are offset with respect to each other from row to row.

8. A mudguard according to one of the preceding claims, characterized in that the inlet openings (10) face the directions of the water sprayed off from the vehicle wheel.

9. A mudguard according to one of the preceding claims, characterized in that the ribs (24) slope downwards, to some extent towards the outer side of the mudguard (2).

10. A mudguard according to one of the preceding claims, characterized in that the chamber (6) has at least one ventilation opening and/or cleaning opening (26).

11. A mudguard according to one of the preceding claims, characterized in that in the chamber (6) there are arranged heating appliances, in particular heating bars, in the zone of the inlet openings (10).

12. A mudguard according to one of the preceding claims, characterized in that the chamber (6) extends over at least one radially inwardly directed edge zone (18) of the mudguard (2).

13. A mudguard according to claim 12, characterized in that the inner wall (8) has further inlet openings (52) in a transition zone (50) towards at least one edge zone (18), to which openings there are assigned water guidance surfaces (54, 56) facing the vehicle wheel and converging towards each other, which are integral with the mudguard (2).

14. A mudguard according to claim 13, characterized in that the further water guidance surfaces (52) are slots (52) extending in the longitudinal direction of the chamber (6).

15. A mudguard according to claim 13 or 14, characterized in that the further water guidance surfaces (52) also face the directions of the water sprayed off from the vehicle wheel.

## Revendications

1. Garde-boue (2) pour couvrir une roue de véhicule, sur la face intérieure duquel est prévue une chambre (6) qui s'étend dans sa direction longitudinale et présente dans une paroi intérieure (8) tournée vers la roue du véhicule, des orifices d'entrée (10) pour l'eau projetée par ladite roue de véhicule et, dans une région inférieure, au moins un orifice de sortie (12) pour l'eau, **caractérisé en ce** que la paroi intérieure (8) comprend, d'un seul tenant, des surfaces de guidage d'eau (20, 22) associées aux orifices d'entrée (10), tournées vers la roue du véhicule et convergeant en direction desdits orifices d'entrée (10), qui constituent des surfaces périphériques de nervures (24) en forme de dents qui s'étendent transversalement par rapport à la chambre (6).

2. Garde-boue selon la revendication 1, caractérisé en ce que la chambre (6) constitue avec le garde-boue (2) une seule pièce en matière plastique, notamment en polyéthylène.

3. Garde-boue selon la revendication 2, caractérisé en ce que la chambre (6) est munie de raidisseurs.

4. Garde-boue selon l'une quelconque des revendications précédentes, caractérisé en ce que la chambre (6) s'étend jusque sur une bavette de garde-boue (14) articulée en bas sur le garde-boue (2).

5. Garde-boue selon la revendication 4, caractérisé en ce que la section transversale de la bavette de garde-boue (14) correspond à la section transversale du garde-boue (2).

6. Garde-boue selon l'une quelconque des revendications précédentes, caractérisé en ce que les orifices d'entrée (10) pour l'eau sont constitués par des fentes (10) qui s'étendent transversalement à la direction longitudinale de la chambre (6).

7. Garde-boue selon la revendication 6, caractérisé en ce que plusieurs fentes (10) sont disposées respectivement dans une rangée orientée transversalement à la direction longitudinale de la chambre (6), et que les fentes (10) sont décalées d'une rangée à l'autre.

8. Garde-boue selon l'une quelconque des revendications précédentes, caractérisé en ce que les orifices d'entrée (10) sont tournés dans les directions de l'eau projetée par la roue du véhicule.

9. Garde-boue selon l'une quelconque des revendications précédentes, caractérisé en ce que les nervures (24) sont légèrement inclinées vers le bas, en direction de la surface extérieure du garde-boue (2).

10. Garde-boue selon l'une quelconque des revendications précédentes, caractérisé en ce que la chambre (6) comporte au moins une ouverture de ventilation et/ou de nettoyage (26).

11. Garde-boue selon l'une quelconque des revendications précédentes, caractérisé en ce que la chambre (6) comporte, dans la région des orifices d'entrée (10, des dispositifs de chauffage, en particulier des tiges chauffantes.

12. Garde-boue selon l'une quelconque des revendications précédentes, caractérisé en ce que la chambre (6) s'étend jusque sur au moins une zone latérale (18) du garde-boue (2) orientée radialement vers l'intérieur.

13. Garde-boue selon la revendication 12, caractérisé en ce que la paroi intérieure (8) comporte dans une zone de transition (50) avec au moins une zone latérale (18), des orifices d'entrée supplémentaires (52) auxquels sont associées des surfaces de guidage d'eau (54, 56) tournées vers la roue de véhicule et conformées d'un seul tenant avec le garde-boue (2), qui convergent en direction desdits orifices d'entrée supplémentaires (52).

14. Garde-boue selon la revendication 13, caractérisé en ce que les orifices d'entrée supplémentaires (52) sont constitués par des fentes (52) qui s'étendent dans la direction longitudinale de la chambre (6).

15. Garde-boue selon l'une des revendications 13 ou 14, caractérisé en ce que les orifices d'entrée supplémentaires (52) sont, eux aussi, orientés dans les directions de l'eau projetée par la roue de véhicule.
